(19) Europäisches Patentamt
European Patent Office
Office européen des brevets

(11) Veröffentlichungsnummer : **0 051 211**
**B1**

(12) # EUROPÄISCHE PATENTSCHRIFT

(45) Veröffentlichungstag der Patentschrift : **19.12.84**

(51) Int. Cl.³ : **C 08 G 18/30**, C 08 G 18/14, C 08 J 9/08

(21) Anmeldenummer : **81108678.4**

(22) Anmeldetag : **22.10.81**

(54) **Verwendung von Carbonsäure-/Carbaminsäure-Anhydriden als CO2-abspaltendes Treibmittel zur Herstellung zelliger oder schaumstoffartiger Kunststoffe.**

(30) Priorität : **04.11.80 DE 3041589**

(43) Veröffentlichungstag der Anmeldung : **12.05.82 Patentblatt 82/19**

(45) Bekanntmachung des Hinweises auf die Patenterteilung : **19.12.84 Patentblatt 84/51**

(84) Benannte Vertragsstaaten : **BE DE FR GB IT**

(56) Entgegenhaltungen :
**DE-A- 2 126 146**
**DE-A- 2 601 408**
**US-A- 2 360 210**
**HOUBEN-WEYL "Methoden der organischen Chemie" 4. Auflage, Band XIV/2 "Makro-molekulare Stoffe" 1963, GEORG THIEME VERLAG, Stuttgart Seite 143**
**JUSTUS LIEBIGS ANNALEN DER CHEMIE Band 561, 1949, Weinhem/Bergstr. S. PETERSEN "Niedermolekulare Umsetzungsprodukte aliphatischer Diisocyanate" S. 205-229**
**R. VIEWEG et al "Kunststoffhandbuch" Band 7: Polyurethane 1966, CARL HANSER VERLAG, München Seite 25**

(73) Patentinhaber : **BAYER AG**
**Konzernverwaltung RP Patentabteilung**
**D-5090 Leverkusen 1 Bayerwerk (DE)**

(72) Erfinder : **Kopp, Richard, Dr.**
**Wolfskaul 12**
**D-5000 Koeln 80 (DE)**
Erfinder : **Grögler, Gerhard, Dr.**
**von Diergardtstrasse 48**
**D-5090 Leverkusen (DE)**
Erfinder : **Mann, Max, Dr.**
**1422 Forest Green Dr.**
**Coraopolis, PA 15108 (US)**

**EP 0 051 211 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist die Verwendung der Additionsprodukte von aliphatischen oder cycloaliphatischen Mono- und/oder Polyisocyanaten an organische, schwach saure Mono- und/oder Polycarbonsäuren in Form fester Carbonsäure-/Carbaminsäure-Anhydride zur Herstellung von zelligen oder schaumstoffartigen Kunststoffartikeln, insbesondere Polyurethanschaumstoffen. Das nachstehend erläuterte erfindungsgemäße Verfahren eignet sich zur Herstellung von beliebigen zelligen oder porösen Kunststoffartikeln, findet jedoch bevorzugte Anwendung bei der Verarbeitung von thermoplastischen Polyurethanen oder bei der Herstellung von halbharten, insbesondere aber harten Polyurethanschaumstoffen mit verdichteter Außenhaut durch Aufschäumen des Reaktionsgemisches in geschlossenen Formen (sogenannten Integralschaumstoffen).

Die Herstellung von derartigen Formkörpern aus Polyurethanschaumstoffen mit kompakter Oberfläche durch Formverschäumung ist grundsätzlich bekannt (s. z. B. DE-B-1 196 864). Sie erfolgt z. B. durch Einfüllen einer reaktionsfähigen und schaumfähigen Mischung auf Basis von Verbindungen mit mehreren, gegenüber Isocyanaten reaktionsfähigen Wasserstoffatomen und Polyisocyanaten reaktionsfähigen Wasserstoffatomen und Polyisocyanaten in eine Form. Als Treibmittel werden hierbei bei den Verfahren des Standes der Technik Wasser und/oder Fluorchlorkohlenwasserstoffe eingesetzt. Auch Katalysatoren, wie sie für die Polyurethanschaumstoffherstellung an sich bekannt sind, werden im allgemeinen mitverwendet. Durch geeignete Wahl der Ausgangskomponenten, insbesondere durch die Wahl des Molekulargewichts und der Funktionalität der Aufbaukomponenten ist es dabei möglich, sowohl elastische als auch starre, bzw. alle zwischen diesen Gruppen liegenden Varianten herzustellen. Die dichte Außenhaut wird bei diesem Verfahren dadurch erreicht, daß in die Form eine größere Menge an schaumfähigem Gemisch eingetragen wird als zum Auffüllen des Formvolumens durch freie Verschäumung erforderlich wäre. Die Forminnenwand bewirkt dabei im allgemeinen eine Abkühlung des Reaktionsgemisches an ihrer Innenfläche und eine Kondensation der vorzugsweise verwendeten organischen Treibmittel, so daß die Treibreaktion an der Forminnenwand zum Stillstand kommt und eine kompakte Außenhaut entsteht.

Als organische Treibmittel kommen für dieses Verfahren ausschließlich halogenierte Kohlenwasserstoffe in Frage, da sie einerseits einen ausreichend niedrigen Siedepunkt besitzen und andererseits keine explosiven Gemische mit Luft bilden. Aus letzterem Grunde ist z. B. die Verwendung von Pentan als Treibmittel problematisch, weil aufwendige Sicherheitsvorkehrungen wegen der niedrigen Explosionsgrenze erforderlich wären. Bewährte Treibmittel für Polyurethan-Integralschaumstoffe sind das Fluortrichlormethan und/oder Methylenchlorid, wobei letztere aus Umweltschutzgründen möglichst durch Fluorkohlenwasserstoff-freie Treibmittel ersetzt werden sollten. Daher ist es wünschenswert, problemlose Treibmittel-Alternativen für die Herstellung von zelligen und porösen Kunststoffartikeln zu entwickeln.

Wie bereits erwähnt, bietet sich Wasser als Treibmittelersatz in Polyurethanen in Form des entwickelten $CO_2$ an. Mittels dieser Variante lassen sich zwar Polyurethanfreischäume von ausgezeichneter Qualität herstellen, nicht hingegen Integralschaumstoffe, da sich sowohl die Oberflächenbeschaffenheit als auch der Integralaufbau des Schaumstoffs gegenüber mit Fluorkohlenwasserstoffen geschäumten Integral-Formteilen stark verschlechtern. Wie dem einschlägigen Fachmann bekannt ist, liegt dies darin begründet, daß das Kohlendioxid sich nicht, wie die organischen Treibmittel, an der kühlen Innenwand der Form kondensieren kann und so die Bildung der angestrebten kompakten Außenhaut nicht erleichtern kann. Bei der Reaktion zwischen Isocyanat und Wasser entstehen aus den Isocyanatgruppen Aminogruppen, welche sofort mit überschüssigen Isocyanatgruppen unter gleichzeitiger Viskositätserhöhung des Reaktionsgemisches weiterreagieren.

Nachteilig ist außerdem, daß das Wasser als Einzelkomponente dem Reaktionsgemisch unmittelbar vor der Verschäumung zudosiert werden müßte, da beim Zusatz entsprechender Wassermengen zur Polyolkomponente, die im allgemeinen bereits den Verschäumungskatalysator enthält, eine zumindest partielle Verseifung der als Katalysator unentbehrlichen Zinnverbindungen, z. B. des Dibutylzinn-(IV)-dilaurats, eintreten kann, was sich in einem unkontrollierten Aktivitätsabfall der fertig formulierten Polyolkomponente äußert.

Weitere Treibmittelvarianten stellen Verbindungen dar, die bei Temperaturen oberhalb Raumtemperatur zerfallen und dabei ein Treibgas abspalten. Beispiele sind Azodicarbonamid, Azo-bis-isobutyronitril oder Diphenylenoxiddisulfohydrazid, die bei Wärmeeinwirkung Stickstoff abspalten ; als Kohlendioxidabspalter sind Pyrokohlensäureester und -anhydride (DE-A-2 524 834/US-A-4 070 310) und Benzooxazine (DE-B-2 218 328) beschrieben. Die Treibgas abspaltenden Verbindungen müssen eine relativ niedrige Zerfallstemperatur haben, die nach allgemeinen Erfahrungen unter 100 °C liegen sollte, da die Treibmittel bereits zu Beginn der Urethanisierungsreaktion wirksam sein sollten, zu diesem Zeitpunkt jedoch noch keine allzu starke Reaktionswärmeentwicklung auftritt. Verbindungen mit einer solch niedrigen Zerfallstemperatur sind aber naturgemäß empfindlich während der Lagerung, sie erfordern eine vorsichtige Behandlung, die in vielen Fällen im technischen Prozeß bei den Verarbeitern von Polyurethan-Schaumstoffen nicht gewährleistet werden kann. Außerdem ist häufig für diese Verbindungen kennzeichnend, daß es zu einem unkontrollierten Zerfall während der Lagerung kommt, so daß sie ein nicht zu unterschätzendes Risiko darstellen.

Es ist auch generell bekannt, daß Carboxylendgruppen in Polyolen bei der Umsetzung mit Isocyanaten $CO_2$ entwickeln und so zur Treibreaktion in Polyurethankunststoffen beizutragen vermögen (O. Bayer, Angewandte Chemie *59,* 267 (1947)). Jedoch ist diese Reaktion — besonders für die technisch verwendeten aromatischen Polyisocyanate — sehr unübersichtlich, führt zu Verfärbungen im Polyurethan und ist bei weitem nicht ausreichend für technische Treibreaktionen. Um zu gutem Polyurethanaufbau in der Polymer bildenden Reaktion zu kommen, müssen üblicherweise Polyole eingesetzt werden, die möglichst ausschließlich OH-Endgruppen aufweisen sollen. Im Falle von Polyesterpolyolen können sie auch einige Carboxylendgruppen (Säurezahlen im üblichen Bereich von etwa 0,1 bis 2) enthalten. Diese geringen Mengen an Carboxyl-Endgruppen spielen jedoch keine Rolle für Treibreaktionen, werden doch solche Polyesterpolyole vorzugsweise zur Herstellung von homogenen Polyurethanelastomeren verwendet. Verwendet man dagegen Polyester mit überwiegend Carboxylendgruppen, so ist die $CO_2$-Abspaltung noch immer ungenügend, der Polymeraufbau verläuft jedoch anders und ergibt von Polyurethanen abweichende Produkteigenschaften.

Überraschenderweise wurde nun gefunden, daß gemischte Carbonsäure-/Carbaminsäure-Anhydride, die durch Addition von schwachen organischen Mono- und/oder Polycarbonsäuren an an aliphatische oder cycloaliphatische Reste gebundene Mono- und/oder Polyisocyanate entstehen, teilweise bereits bei 60 bis 70 °C mit der $CO_2$-Abspaltung beginnen und sowohl als Reinsubstanz als auch in bestimmten Lösungsmitteln (z. B. in der Polyolkomponente der Polyurethane) genügend lagerstabil sind und keine unkontrollierte Reaktion bei mechanischer Beanspruchung (Schlag) oder beim Erhitzen in Gegenwart von in der Polyurethanchemie üblichen Katalysatoren zeigen.

Diese Verbindungen besitzen die allgemeine Formel (I)

$$-X-R-NH-\underset{\underset{O}{\|}}{C}-O-\underset{\underset{O}{\|}}{C}-R'-Y \qquad (I)$$

in der

R einen beliebigen ein- oder mehrwertigen, bevorzugt bis vierwertigen, besonders bevorzugt ein- bis zweiwertigen, gesättigten oder ungesättigten aliphatischen, einen cycloaliphatischen oder araliphatischen, gegebenenfalls durch weitere gegenüber Isocyanaten nicht-reaktive Substituenten, bevorzugt Alkyl ; Aryl- oder Halogen-substituierten Rest,

R' einen ein- oder mehrwertigen, bevorzugt bis 4-wertigen, besonders bevorzugt ein- bis zweiwertigen, aliphatischen, cycloaliphatischen, araliphatischen oder aromatischen Rest, der gegebenenfalls gegen NCO nicht-reaktive Gruppen aus der Reihe Alkyl oder Halogen enthält,

X = H oder

$$NH-\underset{\underset{O}{\|}}{C}-O-\underset{\underset{O}{\|}}{C}-R'-Y$$

und

Y = H oder

$$-\underset{\underset{O}{\|}}{C}-O-\underset{\underset{O}{\|}}{C}-NH-R-X$$

bedeutet.

Wenn R bzw. R' ein einwertiger Rest ist, so ist X bzw. Y = H.

Wenn R ein n-wertiger Rest ist, so ist X = (n − 1) mal der Rest

$$-NH-\underset{\underset{O}{\|}}{C}-O-\underset{\underset{O}{\|}}{C}-R'-Y$$

wenn R' ein n-wertiger Rest ist, so ist

Y = (n − 1) mal der Rest

$$-\underset{\underset{O}{\|}}{C}-O-\underset{\underset{O}{\|}}{C}-NH-R-X$$

Bevorzugt ist für X : H oder 1-mal der Rest

$$-NH-\overset{\overset{O}{\|}}{C}-O-\overset{\overset{O}{\|}}{C}-R'-Y$$

und für Y : H oder 1-mal der Rest

```
-NH-C-O-C-NH-R-X.
    "   "
    O   O
```

Einzelne Vertreter dieser Verbindungsklasse sind in der Literatur bereits beschrieben (s. z. B. S. Petersen, Liebigs Ann. Chem. *562*, 205 (1949) ; Y. Iwakura und K. Yoneshima, Z. Chem. Soc. Jap., Pure Chem. Sect. *70*, 151 bis 153 (1949)). Die Verbindungen lassen sich herstellen, indem einer der Reaktionspartner in einem inerten organischen Lösungsmittel (z. B. Waschbenzin, Petrolether) vorgelegt wird und der andere Reaktionspartner, evtl. in dem selben Lösungsmittel gelöst, unter leichter Kühlung (10 bis 20 °C) zugetropft wird. Es wird normalerweise ein leichter Überschuß an Carbonsäure (bis zu 30 Gew.-%) verwendet.

Für die erfindungsgemäße Verwendung als Treibmittel sind nur diejenigen Verbindungen technisch geeignet, die als Feststoffe anfallen (Schmelzpunkt größer = 40 °C), da nur bei diesen eine genügende Lagerstabilität gegeben ist. Die als Feststoff anfallenden Produkte werden abgesaugt, mit Petrolether gewaschen und an der Luft bis zur Gewichtskonstanz getrocknet.

Die Zerfallsreaktion der gemischten Carbonsäure-/Carbaminsäure-Anhydride ergibt im wesentlichen Amidverknüpfungen neben gasförmigem $CO_2$.

```
                         Bildung                          Zerfall
R-N=C=O  +  HO-C-R'    ---------->   R-NH-C-O-C-R'-    ---------->
                "                         "   "
                O                         O   O

-R-NH-C-R'-  +  CO2
      "
      O
```

Als Isocyanate zur Herstellung der erfindungsgemäßen gemischten Carbonsäure-/Carbaminsäure-Anhydride eignen sich aliphatische, cycloaliphatische und araliphatische Mono- oder Polyisocyanate, bevorzugt bis 4-wertige Polyisocyanate, besonders bevorzugt Mono- und Diisocyanate, welche die NCO-Gruppe an aliphatische oder cycloaliphatische Reste gebunden enthalten, vorzugsweise z. B. Isocyanato-n-butan, Isocyanato-n-hexan, 6-Chlor-isocyanato-n-hexan, 1-Isocyanato-hexadecan, Isocyanato-cyclohexan, 1,4-Diisocyanato-n-butan, 1,6-Diisocyanato-n-hexan, 1,8-Diisocyanato-n-octan, 1-Isocyanato-3-isocyanatomethyl-(3,5,5-trimethyl)-cyclohexan, Capronsäuremethylester-2,6-diisocyanat, 2,4- und/oder 2,6-Diisocyanato-1-methylcyclohexan, 4,4'- und/oder 2,4'-Diisocyanato-bicyclohexylmethan, 4-Phenylcyclohexyl-isocyanat, 4-(p-Methyl-phenyl)-cyclohexyl-isocyanat, 1,4-Diisocyanato-cyclohexan, 4-(3'-Chlor-phenyl)-cyclohexylisocyanat, ferner trimerisierte, biurethisierte oder allophanatisierte aliphatische Diisocyanate.

Als Carbonsäuren zur Herstellung der erfindungsgemäßen gemischten Carbonsäure-/Carbaminsäure-Anhydride eignen sich schwache (gesättigte oder ungesättigte), aliphatische, cycloaliphatische, araliphatische, aromatische oder heterocyclische Carbonsäuren, die schwächere Säuren als Ameisensäure oder Oxalsäure sind, z. B. Essigsäure, Propionsäure, Buttersäure, Capronsäure, Pivalinsäure, Octansäure, Dodecansäure, Kokosfettsäuregemische, Bernsteinsäure, Adipinsäure, Adipinsäurealkylhalbester, Acrylsäure, Methacrylsäure, Cyclohexancarbonsäure, 4,4'-Dicyclohexylmethan-dicarbonsäure, Phenylessigsäure, Benzoesäure, m- oder p-Toluylsäure.

Ameisensäure ($PK_1 = 3,76$) bzw. Oxalsäure ($PK_1 = 1,23$) wären an sich diejenigen Ausgangsverbindungen, welche gemischte Anhydride mit der höchsten $CO_2$-Ausbeute pro Gewicht ergeben würden. Es hat sich jedoch gezeigt, daß ihre gemischten Anhydride instabil sind, ebenso die gemischten Anhydride, welche aus aromatischen Polyisocyanaten und Carbonsäuren hergestellt werden.

Somit werden für das erfindungsgemäße Verfahren solche gemischten Anhydride (I) bevorzugt, welche auf der Basis von schwachen Carbonsäuren (mit einem PK-Wert von etwa 4 bis 7, vorzugsweise von 4,5 bis 6,5) einerseits und von an aliphatische oder cycloaliphatische Reste gebundenen Mono- oder Polyisocyanaten andererseits gebildet worden sind. Gegenstand der Erfindung ist somit die Verwendung von Treibmitteln zur Herstellung zelliger oder geschäumter Kunststoffprodukte, dadurch gekennzeichnet, daß man 0,05 bis 20 Gew.-% gemischten Carbonsäure-/Carbaminsäure-Anhydriden mit einem Schmelzpunkt von mindestens 40 °C aus an aliphatische oder cycloaliphatische Reste gebundenen Mono- und/oder Polyisocyanaten und schwachen organischen Mono- und/oder Polycarbonsäuren mit einem $PK_1$-Wert von 4 bis 7 als Treibmittel einsetzt und bei Temperaturen oberhalb von 100 °C die Treibreaktion durchführt.

Gegenstand der Erfindung sind ferner neue gemischte Carbonsäure-/Carbaminsäure-Anhydride der Formel (I)

```
X-R-NH-C-O-C-R'-Y
       "   "
       O   O                (I)
```

wobei

R einen ein- oder mehrwertigen, bevorzugt ein- oder zweiwertigen, aliphatischen Rest sowie einen

cycloaliphatischen oder einen araliphatischen, gegebenenfalls Alkyl- oder Halogensubstituenten am Kern enthaltend enthaltenden Rest,

R′ einen ein- oder mehrwertigen, vorzugsweise ein- oder zweiwertigen, aliphatischen Rest mit ⩾ 4 C-Atomen, einen cycloaliphatischen Rest, araliphatische oder aromatische Reste mit ⩾ 6 C-Atomen, die gegebenenfalls gegen NCO nicht-reaktive Substituenten aus der Reihe Alkyl oder Halogen enthalten,

X H oder

```
-NH-C-O-C-R'-Y
    "   "
    O   O
```

und

Y H oder

```
-C-O-C-NH-R-X
 "   "
 O   O
```

bedeuten, wobei für X und Y die vorgenannten Einschränkungen gelten.

Gegenstand der Erfindung sind insbesondere solche Carbonsäure-/Carbaminsäure-Anhydride der Formel (I)

```
X-R-NH-C-O-C-R'-Y        (I)
       "   "
       O   O
```

wobei

R einen aliphatischen Rest mit bis zu 16 C-Atomen, einen Cyclohexanrest, den Tetramethylenrest oder den Hexamethylenrest,

R′ den Pivalylrest, oder einen $C_4$-$C_{18}$-Alkylrest, den Phenylrest oder den Tetramethylenrest,

X H oder 1 mal den

```
-NH-C-O-C-R'-Y -Rest
    "   "
    O   O
```

und

Y H oder 1-mal den

```
-C-O-C-NH-R-X -Rest
 "   "
 O   O
```

bedeutet.

In der folgenden Tabelle sind einige der hergestellten gemischten Carbonsäure-/Carbamin-Anhydride mit ihren Schmelz- und Zersetzungspunkten dargestellt :

| Isocyanatkomponente | Carbonsäurekomponente | Schmelzpunkt | Beginn der Zersetzung |
|---|---|---|---|
| Isocyanatocyclohexan | Adipinsäure | 115-118 °C | 136 °C |
| Isocyanatohexadecan | Essigsäure | 58- 60 °C | 80 °C |
| " | Adipinsäure | 73- 76 °C | 136 °C |
| " | Benzoesäure | 102-104 °C | 118 °C |
| 1,4-Diisocyanatobutan | Essigsäure | 63- 65 °C | 65 °C |
| " | Propionsäure | 53- 55 °C | 80 °C |
| " | Pivalinsäure | 86- 88 °C | 95 °C |
| " | Benzoesäure | 92- 94 °C | 103 °C |
| " | Acrylsäure | 54 °C | 54 °C |
| 1,6-Diisocyanatohexan | Essigsäure | 63- 65 °C | 63 °C |
| " | Propionsäure | 66 °C | 66 °C |
| " | Pivalinsäure | 85 °C | 87 °C |
| " | Dodecansäure | 75- 80 °C | 120 °C |
| " | Kokosfettsäuregemisch | 71 °C | 71 °C |
| " | Acrylsäure | 50- 56 °C | 50,5 °C |
| " | Adipinsäure | 110 °C | 110 °C |
| 1,8-Diisocyanatooctan | Essigsäure | 84- 87 °C | 96 °C |
| " | Acrylsäure | 58- 59 °C | 59 °C |

Für eine technische Verwendung kommen besonders solche gemischten Carbonsäure-/Carbaminsäure-Anhydride in Betracht, welche einen Zersetzungsbeginn oberhalb von 50 °C, vorzugsweise oberhalb 62 °C, aufweisen.

Die Verbindungen werden in Mengen von 0,05 bis 20 Gew.-%, vorzugsweise 1 bis 12, für die meisten Zwecke bevorzugt jedoch zwischen 3 und 10 Gew.-%, bezogen auf die Gesamtmenge von Polymerausgangsmaterialien und Treibmittel eingesetzt. Die Treibmittel können den Ausgangsstoffen für die Polymerbildung bzw. den thermoplastischen Materialien vorzugsweise bei Temperaturen unterhalb der Spalt- bzw. Zersetzungstemperatur zugegeben werden. Die erfindungsgemäß eingesetzten gemischten Anhydride der allgemeinen Formel (I) können auch in Kombination mit bereits bekannten Treibmitteln angewendet werden.

Bei der Verarbeitung von thermoplastischen Materialien wird das Treibmittel in das zu verschäumende Material auf übliche Art und Weise eingemischt, beispielsweise auf Mischwalzwerken, Innenmischern oder in mit Rührwerken ausgestatteten Mischbehältern, auch in Form von Aufpudern der Substanz.

In einer bevorzugten Ausführungsform wird das Treibmittel bei der Herstellung von Polyurethan-Integralschaumstoffen im Polyolgemisch dispergiert oder gelöst und dieses mit dem Polyisocyanat zur Reaktion gebracht.

Als Polyol-Ausgangskomponenten für die zellförmigen Polyurethane bzw. die Polyurethanschaumstoffe, einschließlich Integralschaumstoffe, werden in üblicher Weise Verbindungen mit mindestens zwei gegenüber Isocyanaten reaktionsfähigen Wasserstoffatomen und einem Molekulargewicht in der Regel von 62 bis 10 000 in den Einzelkomponenten verwendet. In der überwiegenden Menge ersetzt man dabei vorzugsweise Hydroxylgruppen aufweisende Verbindungen insbesondere 2 bis 8 Hydroxylgruppen aufweisende höhermolekulare Verbindungen, speziell solche vom Molekulargewicht 400 bis 8 000, vorzugsweise 600 bis 4 000, ein. Dies sind z. B. 2, in der Regel 2 bis 8, vorzugsweise aber 2 bis 4, Hydroxylgruppen aufweisende Polyester, Polyether, Polythioether, Polyacetale, Polycarbonate und Polyesteramide oder deren Mischungen, wie sie für die Herstellung von homogenen und zellförmigen Polyurethanen an sich bekannt sind. Sie können mit weiteren, niedermolekularen, polyfunktionellen Verbindungen wie vorzugsweise Polyolen, aber gegebenenfalls auch Polyaminen oder Polyhydraziden mit Molekulargewichten von 62 bis 400 gemischt werden, um die Eigenschaften der Polyurethane zu modifizieren. Der überwiegende Anteil in der Polyolmischung (z. B. mehr als 60 Gew.-%, vorzugsweise mehr als 80 Gew.-%) sind jedoch die höhermolekularen Polyole mit Molekulargewichten von 400 bis 10 000, vorzugsweise von 600 bis 4 000. Das mittlere Molekulargewicht der Polyolmischung aus höhermolekularen und gegebenenfalls niedermolekularen Polyolen soll dabei zwischen 400 und 10 000, vorzugsweise zwischen 600 und 4 000, liegen, wenn zellförmige Polyurethanelastomere und bevorzugt Polyurethanschaumstoffe, einschließlich formgeschäumter Integralschaumstoffe, hergestellt werden sollen.

Die bevorzugt zur Anwendung kommenden, mindestens 2, in der Regel 2 bis 8, vorzugsweise 2 bis 3, Hydroxylgruppen aufweisenden Polyether sind solche der an sich bekannten Art und werden z. B. durch Polymerisation von Tetrahydrofuran oder Epoxiden wie Ethylenoxid, Propylenoxid, Butylenoxid, Styroloxid oder Epichlorhydrin mit sich selbst, z. B. in Gegenwart von Friedel-Krafts-Katalysatoren wie Bortrifluorid, oder durch Anlagerung dieser Ethoxide, vorzugsweise von Ethylenoxid und Propylenoxid, gegebenenfalls im Gemisch, z. B. im Verhältnis von 5 : 95 bis 95 : 5, oder nacheinander, an Startkomponenten mit reaktionsfähigen Wasserstoffatomen wie Wasser, Alkohole, Ammoniak oder Amine, z. B. Ethylenglykol, Propylenglykol, Ethylenglykol, Propylenglykol-1,3 oder -1,2, Trimethylolpropan, Glycerin, Sorbit, 4,4'-Dihydroxydiphenylpropan, Anilin, Ethanolamin oder Ethylendiamin, hergestellt. Auch Sucrose-Polyester sowie auch Formit- oder Formose-gestartete Polyether kommen in Frage. Vielfach sind solche Polyether bevorzugt, die überwiegend (bis zu 90 Gew.-% bezogen auf alle vorhandenen OH-Gruppen im Polyether) primäre OH-Gruppen aufweisen. Auch OH-Gruppen aufweisende Polybutadiene sind geeignet.

Als in Frage kommende Hydroxylgruppen aufweisende Polyester sind z. B. Umsetzungsprodukte von mehrwertigen, vorzugsweise zweiwertigen, und gegebenenfalls zusätzlich dreiwertigen Alkoholen mit mehrwertigen, vorzugsweise zweiwertigen, Carbonsäuren. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein. Als Beispiele für solche Carbonsäuren und deren Derivate seien genannt: Adipinsäure, Sebacinsäure, Isophthalsäure, Trimellitsäure, Phthalsäureanhydrid, Hexahydrophthalsäureanhydrid, Tetrachlorphthalsäureanhydrid, Endomethylentetrahydrophthalsäureanhydrid, Fumarsäure, di- oder trimerisierte ungesättigte Fettsäuren, gegebenenfalls in Mischung mit monomeren ungesättigten Fettsäuren, Terephthalsäuredimethylester und Terephthalsäure-bis-glykolester. Als mehrwertige Alkohole kommen z. B. Ethylenglykol, Propylenglykol, Trimethylenglykol, Tetramethylenglykol, Butylenglykol-2,3, Hexamethylendiol, Octamethylendiol, Neopentylglykol, 1,4-Bis-hydroxymethyl-cyclohexan, 2-Methyl-1,3-propandiol, Glycerin, Trimethylolpropan, Hexantriol-(1,2,6), Trimethylolethan, Pentaerythrit, Sorbit, Formit, Mehtylglycosid, ferner Diethylenglykol, Triethylenglykol, Tetraethylenglykol und höhere Polyethylenglykole, Dipropylenglykol, höhere Propylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäure, z. B. ω-

Hydroxycapronsäure, sind einsetzbar. Zur Erzielung flüssiger Polyesterpolyole werden vorzugsweise Mischungen aus mindestens 2 Polyolen oder mindestens 2 Carbonsäuren verwendet.

Als Polyacetale kommen z. B. die aus Glykolen wie Di-, Tri- oder Tetraethylenglykol, 4,4'-Dioxethoxydiphenyldimethylmethan, Hexandiol und Formaldehyd oder Trioxan herstellbaren Verbindungen in Frage.

Als Hydroxylgruppen aufweisende Polycarbonate kommen solche der an sich bekannten Art in Betracht, wie z. B. durch Umsetzung von Diolen wie Propandiol-1,3, Butandiol-1,4 oder Hexandiol-1,6, Di-, Tri- oder Tetraethylenglykol mit Diarylcarbonaten oder Phosgen hergestellt werden können. Die genannten Polyhydroxylverbindungen können vor ihrer Verwendung im Polyisocyanat-Polyadditionsverfahren noch in der verschiedensten Weise modifiziert werden, z. B. durch weitere Veresterung oder Veretherung bereits vorgebildeter Segmente, durch Umsetzung mit einer weniger als äquivalenten Menge eines Diisocyanatocarbodiimids und anschließende Reaktion der Carbodiimidgruppe mit einem Amin, Amid, Phosphit oder Carbonsäure. Es können gegebenenfalls auch Polyhydroxylverbindungen eingesetzt werden, in welchen hochmolekulare Polyaddukte und Polykondensate bzw. Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den o. g. Hydroxylgruppen aufweisenden Verbindung ablaufen läßt. Auch durch Vinylpolymerisate modifizierte Polyhydroxylverbindungen, wie sie z. B. durch Polymerisation von Styrol und Acrylnitril in Gegenwart von Polyethern oder Polycarbonatpolyolen erhalten werden, sind für das erfindungsgemäße Verfahren geeignet. Bei der Verwendung von modifizierten Polyhydroxylverbindungen der o. g. Art als Ausgangskomponenten im Polyisocyanat-Polyadditionsverfahren entstehen in vielen Fällen Polyurethanschaumstoffe mit wesentlich verbesserten mechanischen Eigenschaften. Selbstverständlich können Mischungen der o. g. Hydroxylverbindungen mit mindestens zwei gegenüber Isocyanaten reaktionsfähigen Wasserstoffatomen mit einem mittleren Molekulargewicht von 400 bis 10 000, z. B. Mischungen von Polyethern und Polyestern, gegebenenfalls in zusätzlicher Einmischung von niedermolekularen Polyolen, eingesetzt werden. Eine noch ausführlichere Aufzählung geeigneter Polyhydroxylverbindungen wird in der DE-A-2 854 384 auf den Seiten 11 bis 21 gegeben.

Als Polyisocyanate können aliphatische, cycloaliphatische, araliphatische, aromatische und heterocyclische Polyisocyanate verwendet werden, wie sie üblicherweise zur Herstellung von Polyurethankunststoffen zum Einsatz kommen.

Beispiele sind 1,6-Hexamethylendiisocyanat, 1,12-Dodecandiisocyanat, Capronsäuremethylester-2,6-diisocyanat, beliebige Gemische der Stellungs- bzw. Stereoisomeren 1-Isocyanato-3,3,5-trimethyl-5-isocyanatomethyl-cyclohexan, 2,4- und 2,6-Hexahydrotoluylendiisocyanat, Hexahydro-1,3- und/oder -1,4-phenylen-diisocyanat, Perhydro-2,4'- und/oder 4,4'-diphenylmethan-diisocyanat, ferner 1,3- und 1,4-Phenylendiisocyanat, 2,4- und/oder 2,6-Toluylendiisocyanat, Diphenylmethan-2,4'- und/oder -4,4'-diisocyanat und seine Alkylderivate, sowie Naphthylen-1,5-diisocyanat. Ferner kommen in Frage : Polyphenyl-polymethylen-Polyisocyanate, wie sie durch Anilin-Formaldehyd-Kondensation und anschließende Phosgenierung erhalten und z. B. in den GB-A-874 430 und 848 671 beschrieben werden, Carbodiimidgruppen aufweisende Polyisocyanate, Allophanatgruppen oder Isocyanuratgruppen oder Urethangruppen oder Biuretgruppen aufweisende Polyisocyanate, sowie durch Telomerisationsreaktionen hergestellte Polyisocyanate. Weitere geeignete Polyisocyanate werden in der DE-A-2 854 384 auf den Seiten 8 bis 11 ausführlich aufgeführt. Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und/oder 2,6-Toluylendiisocyanat (TDI), Polyphenyl-polymethylen-Polyisocyanate, wie sie durch Anilinformaldehydkondensation und Phosgenierung hergestellt werden (rohes MDI) und Carbodiimidgruppen, Urethangruppen, Allophanatgruppen, Isocyanuratgruppen, Harnstoffgruppen oder Biuretgruppen aufweisende Polyisocyanate (modifizierte Polyisocyanat), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Gegebenenfalls können als Reaktivkomponenten für die Polyolmischungen auch weitere Verbindungen mit mindestens zwei gegenüber Isocyanaten reaktionsfähigen Wasserstoffatomen und einem Molekulargewicht von 62 bis 400 vorzugsweise 62 bis 300, verwendet werden. Auch in diesem Fall versteht man hierunter besonders Hydroxylgruppen, aber auch Aminogruppen und/oder Thiogruppen und/oder Carboxylgruppen und/oder Hydrazidendgruppen aufweisende Verbindungen, die als Kettenverlängerungsmittel oder Vernetzungsmittel bezeichnet werden. Diese Verbindungen weisen in der Regel 2 bis 8, vorzugsweise 2 bis 4, gegenüber Isocyanaten reaktionsfähige Wasserstoffatome, insbesondere Hydroxylgruppen, auf. Auch in diesem Fall können Mischungen verschiedener solcher Verbindungen mit einem Molekulargewicht von 62 bis 400 verwendet werden.

Als Beispiele für derartige Verbindungen seien genannt : Ethylenglykol, Propylenglykol, Trimethylenglykol, Tetramethylenglykol, Butylenglykol-2,3, Pentamethylenglykol, Hexamethylenglkykol, Neopentylglykol, 1,4-Bis-hydroxymethyl-cyclohexan, 2-Methyl-1,3-propandiol, Dibrombutendiol, Trimethylolpropan, Pentaerythrit, Chinit, Sorbit, Rizinusöl, Diethylenglykol, höhermolekulare Polyethylenglykole mit einem Molekulargewicht bis 400, Dipropylenglykol oder höhere Polypropylenglykole mit einem Molekulargewicht bis 400, Dibutylenglykol, sowie seine höheren Oligomere mit einem Molekulargewicht bis 400, 4,4'-Dihydroxydiphenylpropan, Dihydroxyethylhydrochinon, aber auch Ethanolamin, Diethanolamin, n-Methyldiethanolamin, n-tert.-Butyl-di-(β-hydroxypropyl-amin), Triethanolamin und 3-Aminopropanol. Als niedermolekulare Polyole kommen auch Gemische von Hydroxyaldehyden und Hydroxyketonen (Formose) bzw. die hieraus durch Reduktion erhaltenen mehrwertigen Alkohole (Formit) in Frage. Als weitere Beispiele für derartige Verbindungen werden in der DE-A-2 854 384 auf Seiten 20 bis 26 weitere Verbindungen aufgeführt.

Ferner können gegebenenfalls gegenüber Isocyanaten monofunktionelle Verbindungen in Anteilen von 0,01 bis 10 Gew.-%, bezogen auf Polyurethanfeststoff, als sogenannte Kettenabbrecher verwendet werden, z. B. Monoamine wie Butyl oder Dibutylamin, Stearylamin, N-Methyl-stearylamin, Piperidin, Cyclohexylamin oder Monoalkohole wie Butanol, 2-Ethylhexanol, Ethylenglykolmonomethylether.

Katalysatoren der an sich bekannten Art können mitverwendet werden, z. B. tert.-Amine wie Triethylamin, n-Methylmorpholin, Tetramethylethylendiamin, 1,4-Diazabicyclo-(2,2,2)-octan, Bis-(dimethylaminoalkyl)-piperazine, Dimethylbenzylamin, 1,2-Dimethylimidazol, mono- und bicyclische Amidine, Bis-(dialkylaminoalkylether), sowie Amid- (vorzugsweise Formamid)-Gruppen aufweisenden tert.-Amine. Als Katalysatoren kommen auch an sich bekannte Mannichbasen aus sekundären Aminen und Aldehyden oder Ketonen in Frage. Erfindungsgemäß werden besonders organische Metallverbindungen wie organische Zinnverbindungen als Katalysatoren verwendet. Als organische Zinnverbindungen kommen neben schwefelhaltigen Verbindungen wie Di-n-octyl-zinn-mercaptid vorzugsweise Zinn-(II)-Salze von Carbonsäuren wie Zinn-(II)-Acetat, Zinn-(II)-Ethylhexoat und die Zinn-(IV)-Verbindungen, z. B. Dibutylzinndichlorid, Dibutylzinndiacetat, Dibutylzinndilaurat oder Dibutylzinnmaleat in Betracht. Selbstverständlich können alle Katalysatoren als Gemische eingesetzt werden. Weitere Vertreter von verwendbaren Katalysatoren sowie Einzelheiten über die Wirkungsweise sind im Kunststoffhandbuch Band VII, herausgegeben von Vieweg und Höchtlen, Carl-Hanser-Verlag, München 1966, z. B. auf den Seiten 96 bis 102 beschrieben bzw. in der DE-A-2 854 384 aufgeführt.

Als Hilfs- und Zusatzmittel können verwendet werden :

Anorganische oder organische Substanzen als Treibmittel, insbesondere Verbindungen wie Methylenchlorid, Chloroform, Vinylidenchlorid, Monofluortrichlormethan, Chlordichlordifluormethan, ferner Luft, $CO_2$ oder Stickoxid. Weitere Beispiele für Treibmittel sowie Einzelheiten über deren Verwendung sind im Kunststoffhandbuch, herausgegeben von Vieweg und Höchtlen, Carl-Hanser-Verlag München, 1966, z. B. auf den Seiten 108 und 109, 453 bis 455 und 507 bis 510 beschrieben.

Oberflächenaktive Zusatzstoffe, wie Emulgatoren und Schaumstoffinitiatoren werden in üblicher Weise mitverwendet. Als Emulgatoren kommen z. B. Natriumsalze von Rizinusöl-Sulfonaten oder Salze von Fettsäuren mit Aminen wie ölsaures Diethylamin, ferner Alkali- oder Ammoniumsalze von Sulfonsäuren wie Dodecylbenzolsulfonsäure oder Dinaphthylmethan-disulfonsäure in Frage.

Als Schaumstabilisatoren kommen vor allem Polyethersiloxane, speziell wasserlösliche Vertreter, in Frage. Reaktionsverzögerer, z. B. sauer reagierende Stoffe wie Salzsäure, Chloressigsäure oder organische Säurehalogenide, ferner Zellregler der an sich bekannten Art wie Paraffine oder Fettalkohole oder Dimethylpolysiloxane, sowie Pigmente oder Farbstoffe und/oder Flammschutzmittel der an sich bekannten Art, ferner Stabilisatoren gegen Alterungs- und Witterungseinflüsse, Weichmacher, fungistatisch und/oder bakteriostatisch wirkende Substanzen, sowie Füllstoffe können mitverwendet werden. Einzelheiten zu diesen Zusatz- und Hilfsstoffen können der DE-A-2 854 384 auf Seiten 26 bis 31 und den dort zitierten Literaturstellen entnommen werden.

Die Schaumstoffherstellung kann sowohl als Freischaum als auch als Formschaum in der üblichen Weise erfolgen. Selbstverständlich können die Schaumstoffe auch zur Blockverschäumung oder nach an sich bekannten Doppeltransportbandverfahren oder irgeneiner weiteren Variante der Schaumstofftechnik hergestellt werden.

(A) Herstellung der gemischten Anhydride

Herstellungsvorschrift 1

Zu 510 g (5 Mol) Pivalinsäure in 1 800 ml Waschbenzin werden bei ca. 10 °C 386,4 g (2,3 Mol) Hexamethylendiisocyanat getropft. Es wird ca. 2 Stunden bei Raumtemperatur gerührt, der Niederschlag abgesaugt, mit Petrolether gewaschen und an der Luft getrocknet.

Ausbeute : 825 g = 96,4 % ; Fp. : 82 bis 85 °C ;

$CO_2$-Entwicklung : 85 bis 150 °C.

Herstellungsvorschrift 2

Zu einer Lösung von 175 g (1,2 Mol) Adipinsäure in 2 000 ml Dioxan werden bei Raumtemperatur 168 g (1,0 Mol) Hexamethylendiisocyanat getropft. Es wird bei Raumtemperatur gerührt, bis sämtliche NCO-Gruppen umgesetzt sind. Dann wird der entstandene Niederschlag abgesaugt, mit Petrolether gewaschen und bei Raumtemperatur an der Luft getrocknet.

Ausbeute : 243 g = 77,4 % ; Fp. : 110 °C ;

$CO_2$-Entwicklung : 110 bis 160 °C.

Herstellungsvorschrift 3 (allgemeine Vorschrift)

Zu einer Lösung von 1,33 Val einer Carbonsäure in 300 bis 800 ml eines inerten organischen Lösungsmittels (vorzugsweise unpolare oder wenigpolare Lösungsmittel wie Kohlenwasserstoffe, Ether, Ketone, Ester, welche zweckmäßig Siedepunkte unter 200° haben) werden bei Raumtemperatur 1 Val eines organischen Isocyanats getropft. Es wird mehrere Stunden bei Raumtemperatur bis zur vollständigen Umsetzung der NCO-Gruppen nachgerührt. Der entstandene Niederschlag wird abgesaugt, mit einem geeigneten Lösungsmittel, vorzugsweise unter 100 °C siedendem Lösungsmittel, wie Petrolether, gewaschen und an der Luft getrocknet. Folgende Verbindungen wurden neu hergestellt :

| Verbindung | Isocyanatkomponente | Carbonsäurekomponente | ⊗ Reaktionslösungsmittel | (ml) | +++ Ausbeute (%) |
|---|---|---|---|---|---|
| A | Isocyanatocyclohexan | Adipinsäure | D | (700) | 16 |
| B | Isocyanatohexadecan | Adipinsäure | D | (700) | 62 |
| C++ | Isocyanatohexadecan | Benzoesäure | D/E | (800) | 11 |
| D | 1,4-Diisocyanatobutan | Benzoesäure | E | (450) | 45 |
| E | 1,4-Diisocyanatobutan | Pivalinsäure | W | (300) | 45 |
| F | 1,6-Diisocyanatohexan | Dodecansäure | W | (800) | 96 |
| G | 1,6-Diisocyanatohexan | Kokosfettsäuregemisch | P | (800) | 92 |

⊗W = Waschbenzin, Kp 100-140 °C ;
P = Petrolether
D = Dioxan
E = Diethylether

++ D/E = 1 : 7
+++ Ausbeute bezogen auf den niedrigsten molaren Einsatz

Herstellungsvorschrift 4

Zu einer Lösung 45 g (0,5 Mol) wasserfreier Oxalsäure ($PK_1 = 1,23$, $PK_2 = 4,19$) in 350 ml Diethylether werden bei Raumtemperatur 84 g (0,5 Mol) 1,6-Diisocyanatohexan getropft. Nach Zugabe von 1/3 der Diisocyanatmenge mußte die Reaktion wegen zu starker Gasentwicklung abgebrochen werden (ungeeignete Carbonsäure).

(B) Verwendung der gemischten Anhydride als Treibmittel

Beispiel 1

In 100 Gew.-Teilen eines Polyolgemisches der Hydroxylzahl 500 und eines Wassergehaltes kleiner als 0,3 Gew.-% und einer Viskosität bei 25 °C von 2 500 mPas, bestehend aus

1. 60 Gew.-Teilen eines Polyethers der OH-Zahl 860, der durch Anlagerung von Propylenoxid an Trimethylolpropan erhalten wurde, und
2. 40 Gew.-Teilen eines Polyethers der OH-Zahl 42, der durch Anlagerung eines 70 : 30 Mol.-%-Gemisches von Propylenoxid und Ethylenoxid an ein Gemisch aus Trimethylolpropan und Propylenglykol (Mol-Verhältnis = 3 : 1) erhalten wurde ;

1,0 Gew.-Teile eines handelsüblichen Polysiloxan-Polyalkylenoxid-Blockcopolymerisats als Schaumstabilisator ; 3,0 Gew.-Teile N-Dimethyl-benzylamin und 0,5 Gew.-Teile Tetramethyl-guanidin als Katalysatoren ; 3,0 Gew.-Teile Amidamin-Ölsäuresalz, hergestellt aus 1 Mol 3-Dimethylaminopropylamin-1 und 2 Mol Ölsäure, als inneres Trennmittel ; 0,2 Gew.-Teile 85 %ige wäßrige ortho-Phosphorsäure als Reaktionsverzögerer werden 10 Gew.-Teile der Verbindung aus Herstellungsvorschrift 1 bei ca. 40 °C gelöst. Nach dem Abkühlen auf Raumtemperatur wird diese Mischung mit 133 Teilen eines Polyisocyanats, das durch Phosgenierung von Anilin-Formaldehyd-Kondensaten erhalten wurde und eine Viskosität von 130 mPas bei 25 °C und einen NCO-Gehalt von 31 Gew.-% aufweist, umgesetzt.

Die Polyurethan-Integralschaum-Prüfplatte wurde auf einer Maschine vom Typ HK-100 hergestellt und die Reaktionszeit während der Verarbeitung auf dieser Maschine ermittelt.

Reaktionszeiten :

Startzeit : 14 Sekunden
Abbindezeit : 29 Sekunden
Formabmessungen : 92 × 42 × 1 cm

Die Prüfplatte zeigt eine glatte und störungsfreie Oberfläche. Die frei geschäumte Rohdichte beträgt 130 $kg/m^3$.

Mechanische Prüfwerte (Dichte 601 g/cm$^3$) ; DIN 53432 :
Biegeversuch :
ob B 40,6 MPa
ob max 40,6 MPa
Durchbiegung 14,3 mm
Durchbiegung bei o max 14 mm
Randfaserdehnung 9,1 %
E-Modul 951 MPa
$WB_{10}$ 82 °C
Zugversuch :
18,6 MPa
ε 11 %
E-Modul 549 MPa

### Beispiel 2

100 Gew.-Teile des Polyols aus Beispiel 1 werden mit 10 Gew.-Teilen des Umsetzungsproduktes aus 1 Mol Adipinsäure und 2 Mol Isocyanatohexadecan intensiv verrührt und mit 133 Gew.-Teilen des Polyisocyanats aus Beispiel 1 umgesetzt. Es entsteht ein Hartschaumstoff mit der Rohdichte 162 kg/m$^3$.

### Beispiel 3

Analog Beispiel 2. Als Treibmittel werden 10 Teile des Umsetzungsproduktes aus 2 Mol Pivalinsäure mit 1 Mol 1,4-Diisocyanatobutan eingesetzt. Es entsteht ein Hartschaumstoff mit der Rohdichte 128 kg/m$^3$.

### Beispiel 4

Ein thermoplastisches Polyurethan der Dichte 1,2 g/cm$^3$, welches aus 100 Teilen Ethandiolbutandiol-adipat, OH-Zahl 56, mittleres Molekulargewicht 2 000 ; 10 Teilen Butandiol-1,4, 40 Teilen 4,4'-Diphenylmethandiisocyanat und 0,3 Teilen Stearylamid als Gleitmittel hergestellt wurde, wird mit einem Zusatz von 3 Teilen des Produktes nach Herstellungsvorschrift 2 auf 97 Teile des PU-Materials durch Aufpudern auf das Granulat versehen und in einem Extruder bie einer Temperatur von 200 bis 210 °C in der Masse zu einer Rundschnur extrudiert. Diese wird dabei durch das Carbonsäure-Carbaminsäureanhydrid zu einer Dichte von 1 g/cm$^3$ aufgetrieben.

Bei einem Zusatz von 5 Teilen des Treibmittels auf 95 Teile des PU-Materials ergibt sich eine Dichte von 0,8 g/cm$^3$ im zelligen Polyurethan.

### Beispiel 5

Analog Beispiel 2. Als Treibmittel werden jeweils 10 Teile der Umsetzungsprodukte nach Herstellungsvorschrift 3 eingesetzt. Es entstehen Hartschaumstoffe mit folgenden Rohdichten :

| Verbindung | Rohdichte (kg/m$^3$) |
|---|---|
| A | 143 |
| C | 297 |
| D | 235 |
| F | 282 |
| G | 250 |

**Ansprüche**

1. Verwendung von Treibmitteln zur Herstellung zelliger oder geschäumter Kunststoffprodukte, dadurch gekennzeichnet, daß man 0,05 bis 20 Gew.-% an gemischten Carbonsäure-/Carbaminsäure-Anhydriden mit einem Schmelzpunkt von mindestens 40 °C aus an aliphatische oder cycloaliphatische Reste gebundenen Mono- und/oder Polyisocyanaten und schwachen organischen Mono- und/oder Polycarbonsäuren mit $PK_s$-Wert von 4 bis 7 als Treibmittel einsetzt und bei Temperaturen oberhalb von 100 °C die Treibreaktion durchführt.

2. Verwendung von Treibmitteln nach Anspruch 1, dadurch gekennzeichnet, daß die gemischten Carbonsäure-/Carbaminsäure-Anhydride der Formel (I)

$$X{-}R{-}NH{-}\underset{\underset{O}{\|}}{C}{-}O{-}\underset{\underset{O}{\|}}{C}{-}R'{-}Y \qquad (I)$$

entsprechen, wobei

R einen ein- oder mehrwertigen, aliphatischen, cycloaliphatischen oder araliphatischen, gegebenenfalls auch weitere, gegenüber Isocyanaten nicht-reaktive Alkyl-, Aryl- oder Halogen-Substituenten enthaltend,

R' einen ein- oder mehrwertigen aliphatischen, cycloaliphatischen, araliphatischen oder aromatischen Rest, der gegebenenfalls gegen NCO nicht-reaktive Substituenten aus der Reihe Alkyl oder Halogen enthält,

X = H oder

$$\mathrm{-NH-}\underset{\overset{\|}{O}}{C}\mathrm{-O-}\underset{\overset{\|}{O}}{C}\mathrm{-R'-Y}$$

und

Y = H oder

$$\mathrm{-}\underset{\overset{\|}{O}}{C}\mathrm{-O-}\underset{\overset{\|}{O}}{C}\mathrm{-NH-R-X}$$

bedeutet.

3. Verwendung nach Ansprüchen 1 und 2, dadurch gekennzeichnet, daß man 1 bis 12 Gew.-%, vorzugsweise 3 bis 10 Gew.-%, der gemischten Carbonsäure-/Carbaminsäure-Anhydride einsetzt.

4. Verwendung nach Ansprüchen 1 bis 3, dadurch gekennzeichnet, daß man die Carbonsäure/Carbaminsäure-Anhydride in den Polyolausgangsmaterialien für Polyurethane dispergiert und/oder löst und mit dieser Treibmittel enthaltenden Polyolmischung die Reaktion zum zelligen Polyurethanelastomeren oder zum Polyurethanschaumstoff durchführt.

5. Verwendung nach Ansprüchen 1 bis 4, dadurch gekennzeichnet, daß man die gemischten Carbonsäure-/Carbaminsäure-Anhydride der Formel (I), gegebenenfalls im Gemisch mit anderen Treibmitteln, zur Herstellung von halbharten bis harten Polyurethan-Integralschaumstoffen einsetzt.

6. Verwendung nach Ansprüchen 1 bis 5, dadurch gekennzeichnet, daß man die gemischten Anhydride aus 1 Mol 1,6-Hexandiisocyanat und 2 Mol an aliphatischen gerad- oder verzweigtkettigen aliphatischen $C_2$- bis $C_{16}$-Monocarbonsäuren verwendet.

7. Verwendung nach Ansprüchen 1 bis 6, dadurch gekennzeichnet, daß man die gemischten Anhydride aus 1 Mol 1,6-Hexandiisocyanat und 1 Mol Adipinsäure verwendet.

8. Verwendung nach Ansprüchen 1 bis 7, dadurch gekennzeichnet, daß man die gemischten Carbonsäure-/Carbaminsäure-Anhydrid-Treibmittel oder deren Gemische mit anderen Treibmitteln einem thermoplastischen Polyurethanelastomeren zumischt und diese Mischung bei Temperaturen oberhalb 100 °C, vorzugsweise größer 200 °C, nach an sich bekannten Verfahren weiterverarbeitet.

**Claims**

1. Use of blowing agents for the production of cellular or foamed plastic products, characterised in that 0.05 to 20 % by weight of mixed carboxylic acid/carbamic acid anhydrides having a melting point of at least 40 °C, obtained from mono- and/or polyisocyanates bonded to aliphatic or cycloaliphatic radicals and weak organic mono- and/or polycarboxylic acids having a $pK_s$ value of 4 to 7, are used as blowing agents and the blowing reaction is carried out at temperatures above 100 °C.

2. Use of blowing agents according to Claim 1, characterised in that the mixed carboxylic acid/carbamic acid anhydrides correspond to the formula (I)

$$\mathrm{X-R-NH-}\underset{\overset{\|}{O}}{C}\mathrm{-O-}\underset{\overset{\|}{O}}{C}\mathrm{-R'-Y} \qquad \text{(I)}$$

wherein

R denotes a mono- or polyfunctional aliphatic, cycloaliphatic or araliphatic radical which optionally also contains further alkyl, aryl or halogen substituents which are not reactive to isocyanates,

R' denotes a mono- or polyfunctional aliphatic, cycloaliphatic, araliphatic or aromatic radical which optionally contains substituents which are not reactive to NCO, from the series comprising alkyl or halogen,

X denotes H or

$$\mathrm{-NH-}\underset{\overset{\|}{O}}{C}\mathrm{-O-}\underset{\overset{\|}{O}}{C}\mathrm{-R'-Y}$$

and

Y denotes H or

$$-\underset{\overset{\|}{O}}{C}-O-\underset{\overset{\|}{O}}{C}-NH-R-X$$

3. Use according to Claims 1 and 2, characterised in that 1 to 12 % by weight, preferably 3 to 10 % by weight, of the mixed carboxylic acid/carbamic acid anhydrides are used.

4. Use according to Claims 1 to 3, characterised in that the carboxylic acid/carbamic acid anhydrides are dispersed and/or dissolved in the polyol starting materials for polyurethanes and the reaction to form the cellular polyurethane elastomer or to form the polyurethane foam is carried out using this polyol mixture containing blowing agents.

5. Use according to Claims 1 to 4, characterised in that the mixed carboxylic acid/carbamic acid anhydrides of the formula (I), optionally in admixture with other blowing agents, are used for the production of semirigid to rigid polyurethane integral foams.

6. Use according to Claims 1 to 5, characterised in that the mixed anhydrides of 1 mole of 1,6-hexane diisocyanate and 2 moles of aliphatic straight- or branched-chain aliphatic $C_2$- to $C_{16}$-monocarboxylic acids are used.

7. Use according to Claims 1 to 6, characterised in that the mixed anhydrides of 1 mole of adipic acid are used.

8. Use according to Claims 1 to 7, characterised in that the mixed carboxylic acid/carbamic acid anhydride blowing agents or mixtures thereof with other blowing agents are added to a thermoplastic polyurethane elastomer and this mixture is further processed by methods known *per se* at temperatures above 100 °C, preferably higher than 200 °C.

**Revendications**

1. Utilisation d'agents moussants pour la fabrication de produits de matières synthétiques cellulaires ou en mousse, caractérisée en ce que, comme agents moussants, on utilise 0,05 à 20 % en poids d'anhydrides mixtes d'acides carboxyliques/acide carbamique d'un point de fusion d'au moins 40 °C, formé à partir de mono- et/ou polyisocyanates liés à des radicaux aliphatiques ou cycloaliphatiques, et d'acides mono- et/ou polycarboxyliques organiques faibles d'une valeur $PK_s$ de 4 à 7 et on effectue la réaction de formation de mousse à des températures supérieures à 100 °C.

2. Utilisation d'agents moussants suivant la revendication 1, caractérisée en ce que les anhydrides mixtes d'acides carboxyliques/acide carbamique répondent à la formule (I)

$$X-R-NH-\underset{\overset{\|}{O}}{C}-O-\underset{\overset{\|}{O}}{C}-R'-Y \qquad (I)$$

où

R représente un radical monovalent ou polyvalent, aliphatique, cycloaliphatique ou araliphatique contenant éventuellement également d'autres substituants alkyle, aryle ou halogène non réactifs vis-à-vis des isocyanates,

R' représente un radical monovalent ou polyvalent, aliphatique, cycloaliphatique, araliphatique ou aromatique contenant éventuellement des substituants non réactifs vis-à-vis des groupes NCO et choisis parmi les groupes alkyle ou les atomes d'halogènes,

X = H ou

$$-NH-\underset{\overset{\|}{O}}{C}-O-\underset{\overset{\|}{O}}{C}-R'-Y$$

et

Y = H ou

$$-\underset{\overset{\|}{O}}{C}-O-\underset{\overset{\|}{O}}{C}-NH-R-X$$

3. Utilisation suivant les revendications 1 et 2, caractérisée en ce qu'on utilise 1 à 12 % en poids, de préférence, 3 à 10 % en poids des anhydrides mixtes d'acides carboxyliques/acide carbamique.

4. Utilisation suivant les revendications 1 à 3, caractérisée en ce qu'on disperse et/ou dissout les anhydrides d'acides carboxyliques/acide carbamique dans les matières de départ de polyols pour les

polyuréthanes et, avec ce mélange de polyols contenant des agents moussants, on effectue la réaction pour obtenir des élastomères de polyuréthanes cellulaires ou une mousse de polyuréthane.

5. Utilisation suivant les revendications 1 à 4, caractérisée en ce qu'on utilise les anhydrides mixtes d'acides carboxyliques/acide carbamique de formule (I), éventuellement en mélange avec d'autres agents moussants, pour fabriquer des mousses intégrales de polyuréthanes semi-dures à dures.

6. Utilisation suivant les revendications 1 à 5, caractérisée en ce qu'on utilise les anhydrides mixtes de 1 mole de 1,6-hexane-diisocyanate et de 2 moles d'acides monocarboxyliques aliphatiques en $C_2$-$C_{16}$ à chaîne droite ou ramifiée.

7. Utilisation suivant les revendications 1 à 6, caractérisée en ce qu'on utilise les anhydrides mixtes de 1 mole de 1,6-hexane-diisocyanate et de 1 mole d'acide adipique.

8. Utilisation suivant les revendications 1 à 7, caractérisée en ce qu'on ajoute les agents moussants d'anhydrides mixtes d'acides carboxyliques/acide carbamique ou leurs mélanges avec d'autres agents moussants à un élastomère de polyuréthane thermoplastique et l'on soumet ce mélange à un traitement complémentaire à des températures supérieures à 100 °C, de préférence, supérieures à 200 °C selon des procédés connus en soi.